# EUROPÄISCHE PATENTSCHRIFT

(11) **EP 3 488 123 B1**
(45) Veröffentlichungstag und Bekanntmachung des Hinweises auf die Patenterteilung: **16.12.2020**
(21) Anmeldenummer: 17739541.5
(22) Anmeldetag: 11.07.2017
(51) Int. Cl.: F16H 57/021, F16H 57/022, F16H 57/031

(54) **MOTORRADANTRIEBSVORRICHTUNG MIT EINSTELLBAREN ZAHNFLANKENSPIEL**
MOTORCYCLE DRIVE DEVICE WITH ADJUSTABLE BACKLASH
DISPOSITIF D'ENTRAÎNEMENT DE MOTOCYCLETTE À JEU D'ENTRAÎNEMENT AJUSTABLE

(30) Priorität: 25.07.2016 DE 102016213620
(43) Veröffentlichungstag der Anmeldung: 29.05.2019
(73) Patentinhaber: Bayerische Motoren Werke Aktiengesellschaft, 80809 München (DE)
(72) Erfinder: WOLFF, Peter, 81477 München (DE); STEINLE, Thomas, 80797 München (DE)
(86) Internationale Anmeldenummer: PCT/EP2017/067361
(87) Internationale Veröffentlichungsnummer: WO 2018/019566

(56) Entgegenhaltungen:
- EP-A1- 1 845 287
- EP-A2- 1 048 824
- DE-A1-102009 025 693
- DE-A1-102013 214 949
- JP-A- S62 107 211
- JP-A- 2006 183 623
- JP-U- H06 500 005

## Beschreibung

Die Erfindung betrifft eine Motorradantriebsvorrichtung mit einstellbarem Zahnflankenspiel zwischen zwei Zahnrädern. Eine Motorradantriebsvorrichtung gemäß dem Oberbegriff des Anspruch 1 ist aus der DE 10 2013 214 949 A1. Die DE 10 2009 025693 A1, JP H06 500005 U, JP 2006 183623 A bilden allgemeinen Stand der Technik für eine Motorradantriebsvorrichtung. Aus der EP 1 845 287 A1 ist ein einstellbares Zahnradsystem bekannt. Aus der EP 1 048 824 A2 ist eine Brennkraftmaschine mit Stirnradgetriebe bekannt. Aus der JP S62 107211 A ist eine Brennkraftmaschine mit Zahnradgetriebe bekannt.

Motorradverbrennungsmotoren weisen häufig gegenüber Verbrennungsmotoren von Automobilen ein hohes Drehzahlniveau auf. Bei ähnlichen erreichbaren Endgeschwindigkeiten für beide Fahrzeugarten führt das zu der Notwendigkeit, einer stärkeren Untersetzung im Motorradgetriebe. Eine erste Untersetzungsstufe des Motorradgetriebes ist daher in Richtung der Drehmomentübertragung zwischen einer Kurbelwelle des Motorradverbrennungsmotors und einer Getriebeeingangswelle angeordnet und reduziert die Getriebeeingangsdrehzahl. Die an dieser Untersetzungsstufe beteiligten Zahnräder weisen als einen Bestandteil Stahl auf.

Ein die Untersetzungsstufe umgebendes und zur Lagerung von Wellen eingerichtetes Gehäuse besteht aus Aluminium, beziehungsweise einer Aluminiumlegierung. Ein derartiges Gehäuse umfasst normalerweise sowohl das Kurbelgehäuse der Verbrennungskraftmaschine als auch das Getriebegehäuse. Die Unterschiedlichen Werkstoffe (Stahl/Aluminium) weisen unterschiedliche Wärmedehnungskoeffizienten auf, dies führt zu einer Temperaturabhängigkeit des Zahnflankenspiels, da sich Zahnräder und Gehäuse unterschiedlich ausdehnen. Aufgrund dieser Gegebenheit werden für diese Verzahnung üblicherweise Zahnradpaare mit geringem Eingriffswinkel (α < 20°) verwendet, da für diese das Zahnflankenspiel wenig von einer Änderung des Achsabstandes abhängt. Weiter sind von anderen Anwendungen am Motorrad Vorrichtungen bekannt, bei welchen das Zahnflankenspiel zwischen zwei Zahnrädern einstellbar ist, die DE 10 2013 214 949 A1 schlägt eine Spielausgleichseinrichtung mit einer Exzenterwelle für einen Nockenwellenantriebsmechanismus vor.

Es ist eine Aufgabe der Erfindung bekannte Antriebsvorrichtungen von Motorrädern weiterzubilden, so dass ein Zahnflankenspiel eines Zahnradpaares einstellbar ist. Diese Aufgabe wird durch eine Motorradantriebsvorrichtung gemäß dem ersten Patentanspruch gelöst, zu bevorzugende Weiterbildungen der Erfindungen sind Gegenstand der abhängigen Ansprüche. Weiter ist eine derartige Antriebsvorrichtung nach einem Verfahren gemäß Anspruch 5 herstellbar, zu bevorzugende Weiterbildungen des Verfahrens sind Gegenstand der abhängigen Ansprüche.

Im Sinne der Erfindung ist unter einer Motorradantriebsvorrichtung eine Antriebsvorrichtung für ein einspuriges Kraftfahrzeug, insbesondere also ein Motorrad, zu verstehen, wobei diese Antriebsvorrichtung zum Bereitstellen von Antriebsleistung für das Überwinden von Fahrwiderständen eingerichtet ist. Im Sinne der Erfindung ist unter einer Verbrennungskraftmaschine eine thermische Kraftmaschine zu verstehen, welche zum Bereitstellen von Antriebsleistung eingerichtet ist. Vorzugsweise ist eine solche Verbrennungskraftmaschine in Hubkolbenbauweise ausgebildet und ist nach dem sogenannten Ottoprinzip betreibbar. Eine solche Verbrennungskraftmaschine weist zum Abgeben der Antriebsleistung eine sogenannte Kurbelwelle auf.

Im Sinne der Erfindung ist unter einem schaltbaren Getriebe eine Einrichtung zum Übertragen der Antriebsleistung von der Verbrennungskraftmaschine in Richtung zu einem antreibbaren Rad zu verstehen, wobei dieses Getriebe ein zwischen einer Getriebeeingangswelle und einer Getriebeausgangswelle veränderbares Übersetzungsverhältnis aufweist. Vorzugsweise ist dieses schaltbare Getriebe als ein Zahnradgetriebe mit einer Vielzahl, in diskreten Stufen veränderbaren, Schaltstufen ausgebildet und ist somit als ein Geschwindigkeitswechselgetriebe zu verstehen. Derartige diskrete unterschiedliche Übersetzungsverhältnisse des schaltbaren Getriebes werden als sogenannte Gänge oder Schaltstufen bezeichnet.

Im Sinne der Erfindung ist unter einem Getriebegehäuse eine Einrichtung zur Aufnahme und Lagerung von Getriebewellen des schaltbaren Getriebes zu verstehen. Ein solches Getriebegehäuse ist insbesondere dazu eingerichtet, Getriebeschmierstoff aufzunehmen. Vorzugsweise weist das Getriebegehäuse als einen Bestandteil Aluminium beziehungsweise eine Aluminiumlegierung auf oder besteht aus einem der genannten Werkstoffe. Weiter vorzugsweise ist das Getriebegehäuse einstückig mit einem Kurbelgehäuse einer Verbrennungskraftmaschine oder bevorzugt als separates Bauteil gegenüber diesem ausgebildet.

Im Sinne der Erfindung ist unter einer Getriebeeingangswelle eine Getriebewelle des schaltbaren Getriebes zu verstehen, welche dazu eingerichtet ist, die Antriebsleistung von der Verbrennungskraftmaschine aufzunehmen und dem schaltbaren Getriebe zuzuführen. Bezogen auf die Drehmomentübertragung von der Verbrennungskraftmaschine zu einem antreibbaren Rad ist die Getriebeeingangswelle die erste Getriebewelle des schaltbaren Getriebes. Vorzugsweise ist auf der Getriebeeingangswelle ein Primärzahnrad angeordnet und drehfest mit dieser verbindbar. Weiter vorzugsweise steht das Primärzahnrad mit einem Primärritzel in Eingriff und dieses Zahnradpaar ist zur Übertragung von Antriebsleistung, welche von der Verbrennungskraftmaschine bereitstellbar ist, auf die Getriebeeingangswelle eingerichtet. Vorzugsweise ist das Primärritzel drehfest mit der Abtriebswelle der Verbrennungskraftmaschine verbindbar, bevorzugt mit der Kurbelwelle dieser. Weiter vorzugsweise ist das Primärritzel konzentrisch zur Abtriebswelle der Verbrennungskraftmaschine angeordnet und das Primärzahnrad ist vorzugsweise konzentrisch zur Getriebeeingangswelle angeordnet.

Das Primärritzel ist dabei um eine Primärritzelachse drehbar gelagert und das Primärzahnrad um eine Getriebeeingangswellenachse. Die Getriebeeingangswelle ist in einem Getriebeeingangswellenlager drehbar gelagert. Das Getriebeeingangswellenlager ist in einem Lagerschild angeordnet. Vorzugsweise ist die Getriebeeingangswelle in dem Getriebeeingangswellenlager und einem weiteren Getriebeeingangswellenlager drehbar gelagert. Vorzugsweise ist der Abstand zwischen diesen beiden Lagern größer als 100 mm und kleiner als 250 mm und bevorzugt ist dieser Abstand, wenigstens im Wesentlichen, 150 mm.

Vorzugsweise ist wenigstens eines der Getriebeeingangswellenlager als Wälzlager und bevorzugt als Rillenkugellager ausgebildet und besonders bevorzugt sind diese beiden Lager (Getriebeeingangswellenlager, weiteres Getriebeeingangswellenlager) als Rillenkugellager ausgebildet. Insbesondere Rillenkugellager ermöglichen geringe Schrägstellung der zu lagernden Bauteile in Bezug auf eine Lagerungsachse. Unter einer geringen Schrägstellung ist im Sinne der Erfindung eine Schrägstellung im Bereich von mehreren Winkelminuten oder weniger zu verstehen, vorzugsweise von +/-10 Winkelminuten oder weniger, bevorzugt von +/-7 Winkelminuten oder weniger und besonders bevorzugt von +/-4 Winkelminuten oder weniger. Insbesondere durch diese Toleranz von Rillenkugellagern gegenüber einer Schrägstellung der Lagerungsachse ist es ermöglicht, eines der Getriebeeingangswellenlager unverschieblich zu gestalten und das andere im Lagerschild zu Einstellbarkeit des Achsabstandes (Primärritzelachse / Getriebeeingangswellenachse) aufzunehmen ohne, dass dadurch eine Lagerlebensdauer negativ beeinflusst ist. Untersuchungen haben gezeigt, dass eine Einstellbarkeit in dem genannten Winkelbereich zu einer Veränderung des Achsabstandes der Primärritzelachse zur Getriebeeingangswellenachse im Bereich von mehreren 1/10 mm führt. Vorzugsweise weist das Primärzahnrad und das Primärritzel einen geringen Eingriffswinkel α auf. Unter einem geringen Eingriffswinkel ist im Sinne der Erfindung ein Eingriffswinkel von weniger als 20° zu verstehen. Vorzugsweise ist ein geringer Eingriffswinkel aus einem Bereich gewählt der vorzugsweise kleiner ist als 20°, bevorzugt kleiner ist als 18° und besonders bevorzugt kleiner oder gleich 16° und weiter vorzugsweise ist dieser Bereich größer als 10°, bevorzugt größer als 13° und besonders bevorzugt größer als 15°. Insbesondere mit einem Eingriffswinkel aus dem genannten Bereich hat sich gezeigt, dass der Bereich Einstellbereich des Achsabstandes von wenigen 1/10 mm ausreichend groß ist, um eine vorteilhafte Einstellung zu ermöglichen. Weiter haben Untersuchungen gezeigt, dass Eingriffswinkel die größer sind als der genannte Bereich, häufig zu einer hohen Empfindlichkeit des Geräuschverhaltens der Zahnräder gegen Fertigungsabweichungen führt, dies ist unerwünscht und Eingriffswinkel die kleiner sind als der angesprochene Bereich führen in der Regel dazu, dass der Einstellbereich für den Achsabstand mit wenigen 1/10mm zu klein ist.

Im Sinne der Erfindung ist unter einem Lagerschild ein Bauteil zu verstehen, welches zur Aufnahme des Getriebeeingangswellenlagers eingerichtet ist und mit dem Getriebegehäuse verbindbar ist und gegenüber diesem bei der Montage verschiebbar ist. Weiter ist die Getriebeeingangswelle in diesem Getriebeeingangswellenlager konzentrisch zur Getriebeeingangswellenachse angeordnet und drehbar gegenüber dem Getriebegehäuse gelagert und durch die Verschiebbarkeit des Lagerschilds ist der Achsabstand der Primärritzelachse zur Getriebeeingangswellenachse einstellbar.

Im Sinne der Erfindung ist unter einem antreibbaren Rad eine Rad/Reifenkombination zu verstehen, welche zur Abgabe der von der Verbrennungskraftmaschine bereitgestellten Antriebsleistung an eine Fahrbahnoberfläche eingerichtet ist, bei einem Motorrad ist dies in der Regel das Hinterrad, also insbesondere eine Hinterradfelge und ein auf dieser montierter Hinterreifen. Vorzugsweise ist die Rad/Reifenkombination über ein Zugmittelgetriebe, insbesondere über einen Kettentrieb oder über einen Kardanantrieb mit Leistung aus dem schaltbaren Getriebe versorgbar.

Zum Verändern der Position der Getriebeeingangswelle und damit der Getriebeeingangswellenachse, gegenüber der Primärritzelachse, weist die Motorradantriebsvorrichtung einen Verstellmechanismus auf. Dabei ist der Verstellmechanismus insbesondere dazu eingerichtet, eine Veränderung der Position des Lagerschildes gegenüber dem Getriebegehäuse zu ermöglichen. Die Verstellbewegung, welche durch den Verstellmechanismus bewirkbar ist, ist so gerichtet, dass sich, zumindest im Bereich des Primärritzels und des Primärzahnrads der Achsabstand zwischen der Primärritzelachse und der Getriebeeingangswellenachse verändert. Insbesondere durch diese Veränderbarkeit des Achsabstandes ist eine Einstellung desselben auf einen vorgebbaren Sollwert ermöglicht und so ist eine verbesserte Motorradantriebsvorrichtung darstellbar.

Vorzugsweise weist das Lagerschild eine Ausnehmung oder bevorzugt einen erhabenen Abschnitt auf, um eine formschlüssige Verbindung mit dem Getriebegehäuse am Lagerschilddrehpunkt auszubilden. Vorzugsweise ist das Lagerschild mit einer Stift-/Bolzenverbindung mit dem Getriebegehäuse verbindbar, bevorzugt ist ein Stift oder Bolzen, welcher zum Ausbilden dieser formschlüssigen Verbindung eingerichtet ist, einstückig mit dem Lagerschild oder bevorzugt mit dem Getriebegehäuse ausgebildet und besonders bevorzugt ist ein Verbindungsstift oder -bolzen als separates Bauteil gegenüber dem Lagerschild und dem Getriebegehäuse ausgebildet. Ein solcher einstückig ausgebildetere Bolzen oder Stift kann als erhabener Bereiche aufgefasst werden. Vorzugsweise weist das jeweils andere Bauteil eine Ausnehmung zur Aufnahme dieses erhabenen Bereichs auf. Vorzugsweise ist der Verstellmechanismus an einem dem Lagerschilddrehpunkt gegenüberliegenden Abschnitt des Lagerschilds angeordnet. Insbesondere durch eine derartige Anordnung treten besonders geringe Kräfte beim Verstellen des Lagerschilds gegenüber dem Getriebegehäuse auf.

Weiter vorzugsweise ist mittels der Exzenterwelle eine formschlüssige Verbindung zwischen dem Lagerschild und dieser Exzenterwelle und zwischen dem Getriebegehäuse und dieser Exzenterwelle herstellbar. Derartige Exzentereinrichtungen als solche sind aus dem Stand der Technik bekannt und somit ist eine besonders einfache Motorradantriebsvorrichtung mit verstellbarem Lagerschild mit einer solchen Einrichtung darstellbar.

In einer bevorzugten Ausführungsform der Erfindung weist die Exzenterwelle eine zweite Exzenterachse auf. Dabei ist diese zweite Exzenterachse gegenüber der ersten Exzenterachse versetzt, also achsparallel aber radial beabstandet zu dieser, wie dies für eine Exzenterwelle üblich ist. Weiter vorzugsweise ist diese zweite Exzenterachse ortsfest gegenüber dem Lagerschild und so ist das Lagerschild durch eine Drehung der Exzenterwelle bewegbar. Insbesondere führt eine Drehung der Exzenterwelle um die erste Exzenterachse zu der Veränderung der Position des Lagerschilds gegenüber dem Getriebegehäuse, insbesondere zu einer Dreh- oder Schwenkbewegung um den Lagerschilddrehpunkt. Vorzugsweise ist an der Exzenterwelle ein Fixierelement angeordnet, bevorzugt ist die Exzenterwelle mit einem Fixierelement verbindbar und besonders bevorzugt ist das Fixierelement einstückig mit der Exzenterwelle ausgebildet.

Vorzugsweise weist das Fixierelement einen Fixierbereich auf. Weiter vorzugsweise ist der Fixierbereich als eine Ausnehmung in dem Fixierelement ausgebildet. Vorzugsweise ist das Fixierelement mit einem Befestigungsmittel an dem Getriebegehäuse oder vorzugsweise an dem Lagerschild, befestigbar. Vorzugsweise ist der Fixierbereich dazu eingerichtet, eine dauerhafte Verbindung, vorzugsweise eine dauerhafte formschlüssige oder bevorzugt reibschlüssige Verbindung, mit dem Getriebegehäuse/Lagerschild auszubilden. Vorzugsweise ist das Befestigungsmittel als eine Schaube, bevorzugt eine Befestigungsschraube, ausgebildet. Vorzugsweise ist mittels der Befestigungsschraube eine Normalkraft auf das Fixierelement aufbringbar und in der Folge ist das Fixierelement reibschlüssig und insbesondere unbeweglich gegenüber dem Getriebegehäuse oder dem Lagerschild gehalten.

Im Sinne der Erfindung ist unter einer dauerhaften Verbindung eine Verbindung zu verstehen, die nach der Montage der Motorradantriebsvorrichtung bei deren planmäßigen Betrieb weiterbesteht, also dauerhaft besteht. Eine dauerhafte Verbindung ist, insbesondere in Abgrenzung zu einer vorübergehenden Verbindung, wie diese insbesondere bei oder für einen Montagevorgang hergestellt und nach diesem wieder aufgehoben wird, also gerade nicht während des planmäßigen Betriebs der Motorradantriebsvorrichtung besteht, zu unterscheiden. Insbesondere mittels einer derartigen dauerhaften Verbindung der Exzenterwelle über den Fixierbereich mit dem Getriebegehäuse und oder dem Lagerschild ist eine besonders betriebssichere Verbindung der Exzenterwelle ermöglicht.

In einer bevorzugten Ausführungsform weist das Fixierelement einen Arretierungsbereich auf. Vorzugsweise ist dieser Arretierungsbereich zum Herstellen einer vorübergehenden Verbindung der Exzenterwelle mit dem Getriebegehäuse oder vorzugsweise dem Lagerschild eingerichtet.

Vorzugsweise weist der Arretierungsbereich zum Herstellen dieser vorübergehenden Verbindung wenigstens eine Ausnehmung, vorzugsweise 2 oder mehr Ausnehmungen auf. Vorzugsweise ist der Arretierungsbereich vom Fixierbereich beabstandet angeordnet. Vorzugsweise ist der Arretierungsbereich zum Arretieren des Fixierelements gegenüber dem Getriebegehäuse/Lagerschild in diskreten Positionen eingerichtet, insbesondere für die Dauer eines Montagevorgangs und nicht während des planmäßigen Betriebs.

Weiter vorzugsweise ist so eine Einstellung des Achsabstandes zwischen der Primärritzelachse und der Getriebeeingangswellenachse in diskreten Stufen ermöglicht. Vorzugsweise ist zum Herstellen der vorübergehenden Verbindung ein Arretierungselement vorgesehen. Insbesondere durch die Einstellbarkeit des Achsabstandes in diskreten Stufen ist einerseits eine besonders einfache Möglichkeit zur Einstellung bereitgestellt und andererseits ist zu einem späteren Zeitpunkt eine Überprüfung der Einstellung möglich, da, für den Fall dass die Einstellposition zwischen zwei diskreten Stufen liegt, eine unplanmäßige Verstellung des Lagerschilds während des planmäßigen Betriebs stattgefunden hat.

In einer bevorzugten Ausführungsform der Erfindung weist die Motorradantriebsvorrichtung ein weiteres, verstellbares Lagerschild, vorzugsweise der zuvor beschriebenen Art, auf. Bei einer Ausführungsform der Erfindung mit nur einem einzigen verstellbaren Lagerschild kann sich durch eine Verstellung der Position des Lagerschilds eine Schrägstellung der Getriebeeingangswellenachse gegenüber der Primärritzelachse ergeben. Diese Schrägstellung kann insbesondere damit erklärt werden, dass die Getriebeeingangswelle mittels zwei Getriebeeingangswellenlagern im Getriebe lagerbar ist, von welchen eines im Lagerschild aufgenommen und mit diesem verschiebbar ist und das andere dieser Lager ist ortsfest im Getriebegehäuse aufgenommen.

Die Verwendung eines zweiten verstellbaren Lagerschildes führt zwar einerseits zu einem erhöhten Bauaufwand des Getriebegehäuses, jedoch ist es andererseits ermöglicht, die Getriebeeingangswellenachse achsparallel zur Primärritzelachse zu verschieben. Vorzugsweise weist dazu das weitere verstellbare Lagerschild einen weiteren Verstellmechanismus zum Verändern der Position des weiteren Lagerschilds gegenüber dem Getriebegehäuse auf. Vorzugsweise ist eines der Getriebeeingangswellenlager in dem weiteren, verstellbaren Lagerschild und das andere Getriebeeingangswellenlager ist in dem verstellbaren Lagerschild angeordnet und dadurch ist eine achsparallele Verschiebung der Getriebeeingangswellenachse zur Primärritzelachse ermöglicht.

Erfindungsgemäß ist ein Verfahren zum Einstellen eines Zahnflankenspiels mit einer Motorradantriebsvorrichtung der zuvor beschriebenen Bauart vorgesehen. Bei einem derartigen Verfahren wird zunächst ein Ausgangszahnflankenspiel zwischen dem Primärritzel und dem Primärzahnrad erfasst. Danach wird dieses Ausgangszahnflankenspiels mit einem Sollzahnflankenspiel verglichen. Dabei können diese Zahnflankenspiele durch indirekte oder direkte Messwerte/- methoden bestimmt werden. Nachdem das Ausgangszahnflankenspiel mit dem Sollzahnflankenspiel verglichen ist, wird, aufgrund dieses Vergleichs, mittels des Verstellmechanismus eine Sollposition des verstellbaren Lagerschilds gegenüber dem Getriebegehäuse eingestellt, in welcher sich ein Istzahnflankenspiel zwischen dem Primärritzel und dem Primärzahnrad ausbildet. Dabei entspricht dieses Istzahnflankenspiel, wenigstens im Wesentlichen, dem Sollzahnflankenspiel, welches vorgebbar ist. Insbesondere durch eine derartige Einstellung des Istzahnflankenspiels stellt sich ein besonders vorteilhaftes Betriebsverhalten der Motorradantriebsvorrichtung ein.

In einer bevorzugten Ausführungsform des Verfahrens zum Einstellen des Zahnflankenspiels wird, nachdem das Lagerschild mit dem Verstellmechanismus in die Sollposition gebracht ist, das Fixierelement mit einem Arretierungselement im Arretierungsbereich mit dem Getriebegehäuse verbunden. Vorzugsweise ist das Arretierungselement als formschlüssiger Verbinder, vorzugsweise als Absteckstift oder bevorzugt als Arretierungspin ausgebildet. Durch diese Verbindung des Fixierelements mittels des Arretierungsbereichs und mit dem Arretierungselement, ist vorzugsweise eine vorübergehende Verbindung zwischen der Exzenterwelle und dem Getriebegehäuse/Lagerschild herstellbar und so ist für die Montagevorgänge eine Verdrehung der Exzenterwelle gegenüber dem Getriebegehäuse verhindert. Insbesondere durch diese vorübergehende Verbindung wird das Lagerschild vorübergehend in der Sollposition gehalten und weitere Montageschritte können ausgeführt werden. Insbesondere durch ein derartiges vorübergehendes Verbinden ist eine besonders fehlerunanfällige Montage der Motorradantriebsvorrichtung ermöglicht. In einer weiter bevorzugt Ausführungsform verbleibt ein formschlüssiger Verbinder auch im planmäßigen Betrieb der Motorradantriebsvorrichtung und ermöglicht insbesondere dadurch eine besonders sichere Fixierung der Position des Fixierelements.

In einer bevorzugten Ausführungsform des Verfahrens zum Einstellen des Zahnflankenspiels wird das Lagerschild, vorzugsweise nach dem dieses mittels des Arretierungselements in der Sollposition gehalten wird, mit weiteren Befestigungsmitteln mit dem Getriebegehäuse verbunden. Vorzugsweise sind diese weiteren Befestigungsmittel als Schrauben ausgebildet, bevorzugt weitere Befestigungsschrauben. Insbesondere durch diese weiteren Befestigungsmittel werden das Lagerschild und damit die Getriebeeingangswelle, dauerhaft in der gleichen Position gegenüber dem Getriebegehäuse gehalten und es ist ein sicherer Betrieb der Motorradantriebsvorrichtung ermöglicht.

In einer bevorzugt Ausführungsform des Verfahrens zum Einstellen des Zahnflankenspiels, wird das Fixierelement im Fixierbereich mittels eines Befestigungsmittels mit dem Getriebegehäuse oder mit dem Lagerschild verbunden. Vorzugsweise nach diesem Verbinden wird das Arretierungselement entfernt, bevorzugt kann das Arretierungselement auch schon bevor das Fixierelement im Fixierbereich mittels des Befestigungsmittels mit dem Getriebegehäuse verbunden ist, entfernt werden. Insbesondere durch diese Verbindung mit dem Befestigungsmittel ist auch das Fixierelement in seiner Lage dauerhaft gehalten und so wird eine Veränderung der Position des Lagerschilds gegenüber dem Getriebegehäuse zusätzlich verhindert.

Nachfolgend sind einzelne Merkmale und Ausführungsformen der Erfindung in teilweise schematisierter Form anhand der Figuren näher erläutert, dabei zeigt:
- Figur 1: ein Drahtgittermodell eines Getriebes mit einstellbaren Achsabstand,
- Figur 2: eine vereinfachte Darstellung eines Lagerschilds mit dem zugehörigen Verstellmechanismus.

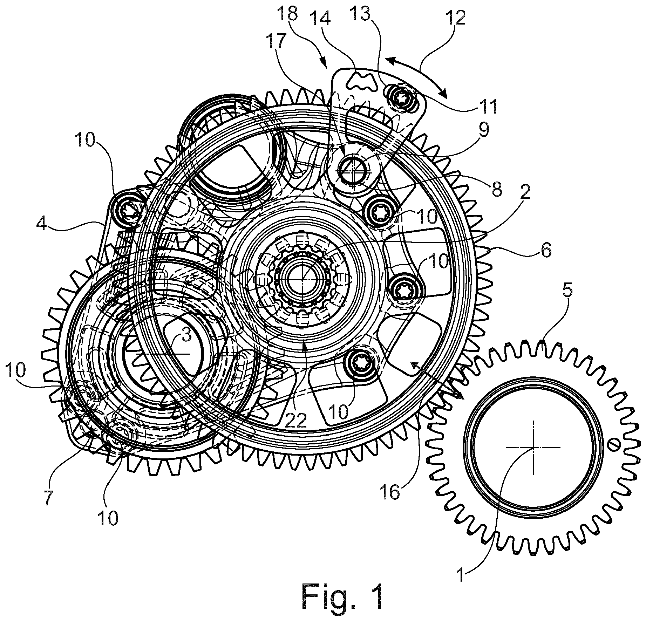

In Figur 1 ist ein Drahtgittermodell eines Getriebes einer Motorradantriebsvorrichtung mit einem einstellbaren Achsabstand zwischen der Primärritzelachse 1 und der Getriebeeingangswellenachse 2 dargestellt. Um die Getriebeeingangswellenachse 2 ist die Getriebeeingangswelle drehbar gelagert, auf dieser Getriebeeingangswelle ist das Primärzahnrad 6 dreh- und axialfest angeordnet. Das Primärzahnrad 6 kämmt zur Leistungsübertragung mit dem Primärritzel 5, steht mit diesem also in eingriff. Das Primärritzel 5 ist um die Primärritzelachse 1 drehbar gelagert und dreh- und axialfest mit einer Abtriebswelle einer Verbrennungskraftmaschine (nicht dargestellt) verbunden.

Eines der Getriebeeingangswellenlager 22, in welchem die Getriebeeingangswelle drehbar gelagert ist, ist in dem als Lagerschild ausgeführten Getriebedeckel 4 angeordnet. Der Getriebedeckel 4 ist mittels einer Mehrzahl von weiteren Befestigungsmitteln, welche als Befestigungsschrauben 10 ausgebildet sind, mit dem Getriebegehäuse (nicht dargestellt) dauerhaft verbunden. Neben der Getriebeeingangswellenachse 2 weist die Motorradantriebsvorrichtung zumindest eine weitere Achse 3 auf, um welche weitere Getriebeachsen, vorliegend die Getriebeabtriebswelle, drehbar gelagert sind. Von der Getriebeabtriebswelle wird die von der Verbrennungskraftmaschine bereitstellbare Antriebsleistung weiter in Richtung Hinterrad des Motorrads übertragen.

Der Getriebedeckel 4 ist über einen Verstellmechanismus (8, 9, 11, 13, 14) in Richtung 16 verstellbar. Dazu ist der Getriebedeckel 4 über den Drehpunkt 7 mit dem Getriebegehäuse (nicht dargestellt) schwenkbar verbunden. Der Verstellmechanismus weist eine Exzenterwelle 17 auf und ist auf einer gegenüberliegenden Seite, in Bezug auf den Drehpunkt 7, des Lagerdeckels angeordnet. Die Exzenterwelle 17 ist mit dem Fixierelement 18 drehfest verbunden. Die Exzenterwelle 17 weist eine Getriebegehäusedrehachse 8 (erste Exzenterachse) auf, welche ortsfest gegenüber dem Getriebegehäuse (nicht dargestellt) angeordnet ist und eine Getriebedeckeldrehachse 9 (zweite Exzenterachse), welche ortsfest gegenüber dem Getriebedeckel 4 angeordnet ist. Durch eine Bewegung des Fixierelements 18 in Richtung 12 wird die Exzenterwelle 17 gedreht und eine Bewegung des Getriebedeckels 4 in Richtung 16 hervorgerufen.

Das Fixierelement 18 weist einen Arretierungsbereich 14 auf, welcher zum formschlüssigen aber vorübergehenden Verbinden des Fixierelements 18 mit dem Getriebegehäuse (nicht dargestellt) eingerichtet ist. Über diesen Arretierungsbereich 14 kann eine Sollposition des Getriebedeckels 4 gefunden werden, in dem ein vorgebbar Achsabstand zwischen der Primärritzelachse 1 und der Getriebeeingangswellenachse 2 eingestellt ist.

Ist bei der Montage der Motorradantriebsvorrichtung die gewünschte Sollposition des Getriebedeckels 4 gefunden und vorübergehend festgelegt, ist dieser also arretiert, so kann das Fixierelement 18 über den Fixierbereich 13 dauerhaft mittels der Fixierschraube 11, welche als Befestigungsmittel ausgebildet ist, mit dem Getriebegehäuse (nicht dargestellt) verbunden werden. Über die Fixierschraube 11 ist die Position des Fixierelements 18 und damit der Exzenterwelle 17 und des Getriebedeckels 4 gegenüber dem Getriebegehäuse dauerhaft festgelegt.

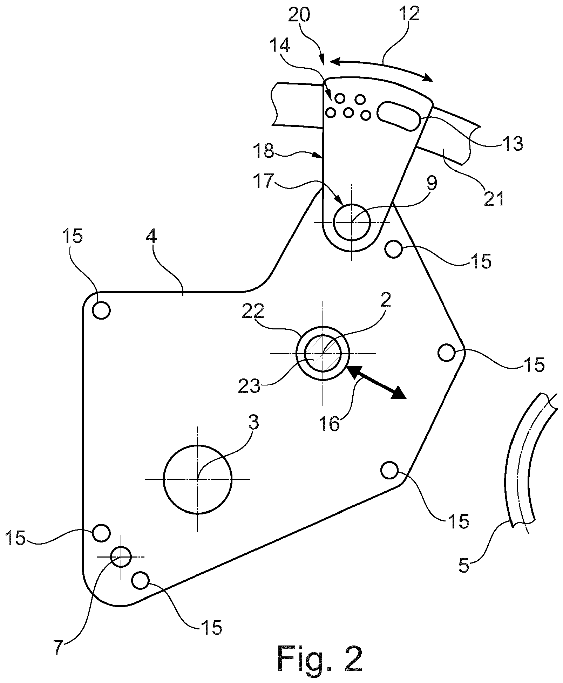

In Figur 2 ist eine Draufsicht auf den Getriebedeckel 4 mit Verstellmechanismus 20 der Motorradantriebsvorrichtung dargestellt. Der Arretierungsbereich 14 weist eine Vielzahl einzelner Bohrungen auf. Der Fixierbereich 13 ist als Langloch ausgeführt um eine Verstellung in Richtung 12 für das Fixierelement 18 zu ermöglichen. Über den Arretierungsbereich 14 sowie über den Fixierbereich 13 ist das Fixierelement 18 mit dem Getriebegehäuse 21 formschlüssig verbindbar. Die Getriebedeckeldrehachse 9 der Exzenterwelle 17 ist ortsfest gegenüber dem Gehäusedeckel 4 angeordnet. Der Gehäusedeckel 4 weist eine Vielzahl von Bohrungen 15 zur Aufnahme der weiteren Befestigungsmittel, welche als Befestigungsschrauben (nicht dargestellt) ausgeführt sind, auf. Weiter ist der Gehäusedeckel 4 um den Drehpunkt 7 schwenkbar mit dem Getriebegehäuse 21 verbunden. Um die Getriebeeingangswellenachse 2 ist die Getriebeeingangswelle 23 im Getriebeeingangswellenlager 22 drehbar gelagert und das Primärzahnrad (nicht dargestellt) ist auf der Getriebeeingangswelle 23 angeordnet und steht zur Leistungsübertragung in Eingriff mit dem Primärritzel 5.

Eine Drehbewegung des Fixierelements 18 in Richtung 12 führt zu einer Bewegung des Getriebedeckels 4 in Richtung 16 und somit ist der Achsabstand zwischen der Primärritzelachse (nicht dargestellt) und der Getriebeeingangswellenachse 2, im Bereiche des Primärritzels 5 und des Primärzahnrads, einstellbar.

## Patentansprüche

1. Motorradantriebsvorrichtung mit einer Verbrennungskraftmaschine mit einer Kurbelwelle zum Abgeben einer Antriebsleistung und mit einem schaltbaren Getriebe mit einer Getriebegehäuse (21), welches zum Übertragen der von der Verbrennungskraftmaschine bereitstellbaren Antriebsleistung in Richtung zu einem antreibbaren Rad eingerichtet ist und mit einer Getriebeeingangswelle (23), welche zur Aufnahme dieser Antriebsleistung in diesem Getriebe eingerichtet ist und mit einem Primärzahnrad (6), welches auf der Getriebeeingangswelle angeordnet ist und mit einem Primärritzel (5), welches zur Übertragung der Antriebsleistung mit dem Primärzahnrad (6) in Eingriff steht und um eine Primärritzelachse (1) drehbar gelagert ist und mit einem Getriebeeingangswellenlager (22), welches in einem Lagerschild (4) angeordnet ist und in welchem die Getriebeeingangswelle (23) gegenüber dem Lagerschild (4) um eine Getriebeeingangswellenachse (2) drehbar gelagert ist,
wobei
das Lagerschild einen Verstellmechanismus (20) zum Verändern der Position des Lagerschilds (4) gegenüber dem Getriebegehäuse (21) aufweist, so dass ein Achsabstand zwischen der Primärritzelachse (1) und der Getriebeeingangswellenachse (2) im Bereich des Primärritzels (5) und des Primärzahnrads (6) verändert wird und
wobei das Lagerschild (4) an einem Lagerschilddrehpunkt (7) um eine Lagerschilddrehachse drehbar mit dem Getriebegehäuse (21 verbunden wird,
**dadurch gekennzeichnet, dass .**
der Verstellmechanismus (20) zum Verändern der Position des Lagerschilds (4) eine Exzentereinrichtung mit einer Exzenterwelle (17) aufweist,
dass die Exzentereinrichtung mit dem Getriebegehäuse (21) und mit dem Lagerschild (4) verbunden wird und, dass die Exzenterwelle (17) um eine gegenüber dem Getriebegehäuse ortsfeste erste Exzenterachse (8), zum Verändern des Achsabstandes zwischen der Primärritzelachse (1) und der Gewindeeingangswellenachse (2), gedreht wird.

2. Motorradantriebsvorrichtung nach Anspruch 1, **dadurch gekennzeichnet, dass** das Lagerschild (4) eine, gegenüber diesem ortsfeste, zweite Exzenterachse (9) aufweist, dass die zweite Exzenterachse (9) achsparallel zur ersten Exzenterachse (8) aber radial beabstandet zu dieser ist und, dass eine Drehung der Exzenterwelle (17) um die erste Exzenterachse (8) zu einer Veränderung der Position des Lagerschilds (4) gegenüber dem Getriebegehäuse (21) führt und, dass die Exzenterwelle (17) mit einem Fixierelement (18) drehfest verbunden ist, dass das Fixierelement (18) einen Fixierbereich (13) aufweist und, dass das Fixierelement (18) mit einem Befestigungsmittel (11) gegenüber dem Getriebegehäuse (21) befestigt wird so dass eine Drehbewegung der Exzenterwelle (17) um die erste Exzenterachse (8) verhindert ist.

3. Motorradantriebsvorrichtung nach Anspruch 2, **dadurch gekennzeichnet, dass**
das Fixierelement (18) einen Arretierungsbereich (14) aufweist,
dass der Arretierungsbereich (14) wenigstens zwei Ausnehmungen zum Arretieren des Fixierelements (18) gegenüber dem Getriebegehäuse (21) in diskreten Positionen aufweist.

4. Motorradantriebsvorrichtung nach einem der vorhergehenden Ansprüche, **dadurch gekennzeichnet, dass**
diese ein weiteres Lagerschild mit einem weiteren Verstellmechanismus zum Verändern der Position des weiteren Lagerschilds gegenüber dem Getriebegehäuse (21) aufweist und, dass in dem weiteren Lagerschild die Getriebeeingangswelle (23) in einem weiteren Getriebeeingangswellenlager drehbar gelagert ist.

5. Verfahren zum Einstellen eines Zahnflankenspiels einer Motorradantriebsvorrichtung nach einem der vorhergehenden Ansprüche mit den Schritten,
Erfassen eines Ausgangszahnflankenspiels zwischen dem Primärritzel (5) und dem Primärzahnrad (6),
Vergleichen des Ausgangszahnflankenspiels mit einem Sollzahnflankenspiel,
Einstellen einer Sollposition des Lagerschilds (4) gegenüber dem Getriebegehäuse (21) mittels des Verstellmechanismus (20), wobei in dieser Sollposition ein Istzahnflankenspiel zwischen dem Primärritzel (5) und dem Primärzahnrad (21) dem Sollzahnflankenspiel, zumindest im Wesentlichen, entspricht.

6. Verfahren zum Einstellen des Zahnflankenspiels nach Anspruch 5,
**dadurch gekennzeichnet, dass**
nachdem das Lagerschild (4) mit dem Verstellmechanismus (20) in die Sollposition gebracht ist, das Fixierelement (18) mittels dessen Arretierungsbereich (14) mit einem Arretierungselement mit dem Getriebegehäuse (21) verbunden wird und so das Lagerschild (4) in der Sollposition gehalten wird.

7. Verfahren nach einem der Ansprüche 5 oder 6, **dadurch gekennzeichnet, dass**
das Lagerschild (4), nach dem dieses mittels des Arretierungselements in der Sollposition gehalten wird, mit weiteren Befestigungsmitteln (10) mit dem Getriebegehäuse (21) verbunden wird.

8. Verfahren nach einem der Ansprüche 5 bis 7, **dadurch gekennzeichnet, dass** Fixierelement (18) im Fixierbereich (13) mit dem Getriebegehäuse (21) verbunden wird und, dass das Arretierungselement entfernt wird, nachdem das Fixierelement (18) mit dem Befestigungsmittel (11) mit dem Getriebegehäuse (21) verbunden ist.

## Claims

1. Motorcycle drive apparatus with an internal combustion engine with a crankshaft for the output of drive power and with a shiftable transmission with a transmission housing (21), which transmission is set up for the transmission of the drive power which can be provided by the internal combustion engine in the direction of a wheel which can be driven, and with a transmission input shaft (23) which is set up for receiving the said drive power in the said transmission, and with a primary gearwheel (6), which is arranged on the transmission input shaft, and with a primary pinion (5), which is in engagement with the primary gearwheel (6) for the transmission of the drive power and is mounted such that it can be rotated about a primary pinion axis (1), and with a transmission input shaft bearing (22) which is mounted in a bearing plate (4) and in which the transmission input shaft (23) is mounted such that it can be rotated about a transmission input shaft axis (2) with respect to the bearing plate (4), the bearing plate having an adjusting mechanism (20) for changing the position of the bearing plate (4) with respect to the transmission housing (21), with the result that an axial spacing between the primary pinion axis (1) and the transmission input shaft axis (2) is changed in the region of the primary pinion (5) and the primary gearwheel (6), and the bearing plate (4) being connected to the transmission housing (21) at a bearing plate pivot point (7) such that it can be rotated about a bearing plate rotational axis, **characterized in that** the adjusting mechanism (20) has an eccentric device with an eccentric shaft (17) for changing the position of the bearing plate (4), **in that** the eccentric device is connected to the transmission housing (21) and to the bearing plate (4), and **in that** the eccentric shaft (17) is rotated about a first eccentric axis (8) which is stationary with respect to the transmission housing, in order to change the axial spacing between the primary pinion axis (1) and the threaded input shaft axis (2).

2. Motorcycle drive apparatus according to Claim 1, **characterized in that** the bearing plate (4) has a second eccentric axis (9) which is stationary with respect to it, **in that** the second eccentric axis (9) is axially parallel with respect to the first eccentric axis (8) but is spaced apart radially from the latter, and **in that** a rotation of the eccentric shaft (17) about the first eccentric axis (8) leads to a change in the position of the bearing plate (4) with respect to the transmission housing (21), and **in that** the eccentric shaft (17) is connected fixedly to fixing element (18) so as to rotate with it, **in that** the fixing element (18) has a fixing region (13), and **in that** the fixing element (18) is fastened by way of a fastening means (11) with respect to the transmission housing (21), with the result that a rotational movement of the eccentric shaft (17) about the first eccentric axis (8) is prevented.

3. Motorcycle drive apparatus according to Claim 2, **characterized in that** the fixing element (18) has a locking region (14), **in that** the locking region (14) has at least two recesses for locking the fixing element (18) with respect to the transmission housing (21) in discrete positions.

4. Motorcycle drive apparatus according to one of the preceding claims, **characterized in that** it has a further bearing plate with a further adjusting mechanism for changing the position of the further bearing plate with respect to the transmission housing (21), and **in that** the transmission input shaft (23) is mounted rotatably in the further bearing plate in a further transmission input shaft bearing.

5. Method for setting a backlash of a motorcycle drive apparatus according to one of the preceding claims having the steps:
detecting a starting backlash between the primary pinion (5) and the primary gearwheel (6),
comparing the starting backlash with a setpoint backlash, setting a setpoint position of the bearing plate (4) with respect to the transmission housing (21) by means of the adjusting mechanism (20), an actual backlash between the primary pinion (5) and the primary gearwheel (21) corresponding, at least substantially, in said setpoint position to the setpoint backlash.

6. Method for setting the backlash according to Claim 5, **characterized in that**, after the bearing plate (4) is moved into the setpoint position by way of the adjusting mechanism (20), the fixing element (18) is connected by means of its locking region (14) by way of a locking element to the transmission housing (21), and the bearing plate (4) is thus held in the setpoint position.

7. Method according to either of Claims 5 and 6, **characterized in that** the bearing plate (4), after it is held in the setpoint position by means of the locking element, is connected by way of further fastening means (10) to the transmission housing (21).

8. Method according to one of Claims 5 to 7, **characterized in that** the fixing element (18) is connected in the fixing region (13) to the transmission housing (21), and **in that** the locking element is removed after the fixing element (18) is connected by way of the fastening means (11) to the transmission housing (21).

## Revendications

1. Dispositif d'entraînement de motocyclette doté d'un moteur à combustion interne comportant un vilebrequin pour fournir une puissance d'entraînement et une transmission commutable dotée d'un carter de transmission (21), lequel est conçu pour transmettre la puissance d'entraînement pouvant être fournie par le moteur à combustion interne en direction d'une roue pouvant être entraînée, et d'un arbre d'entrée de transmission (23), lequel est conçu pour la réception de cette puissance d'entraînement dans cette transmission, et d'une roue dentée primaire (6), laquelle est disposée sur l'arbre d'entrée de transmission, et d'un pignon primaire (5), lequel est en engrènement avec la roue dentée primaire (6) pour la transmission de la puissance d'entraînement et est monté rotatif autour d'un axe de pignon primaire (1), et d'un palier d'arbre d'entrée de transmission (22), lequel est disposé dans un flasque de palier (4) et dans lequel l'arbre d'entrée de transmission (23) est monté rotatif autour d'un axe d'arbre d'entrée de transmission (2) par rapport au flasque de palier (4),
dans lequel le flasque de palier comprend un mécanisme de réglage (20) pour la modification de la position du flasque de palier (4) par rapport au carter de transmission (21), de sorte qu'un entraxe entre l'axe de pignon primaire (1) et l'axe d'arbre d'entrée de transmission (2) soit modifié dans la région du pignon primaire (5) et de la roue dentée primaire (6) et
dans lequel le flasque de palier (4) est relié au carter de transmission (21) de manière rotative autour d'un axe de rotation de flasque de palier en un point de rotation de flasque de palier (7),
**caractérisé en ce que**
le mécanisme de réglage (20) pour la modification de la position du flasque de palier (4) comporte un dispositif à excentrique doté d'un arbre à excentrique (17),
**en ce que** le dispositif à excentrique est relié au carter de transmission (21) et au flasque de palier (4) et
**en ce que** l'arbre à excentrique (17) est entraîné en rotation autour d'un premier axe excentrique (8) fixe par rapport au carter de transmission, pour la modification de l'entraxe entre l'axe de pignon primaire (1) et l'axe d'arbre d'entrée fileté (2).

2. Dispositif d'entraînement de motocyclette selon la revendication 1, **caractérisé en ce que** le flasque de palier (4) comprend un deuxième axe excentrique (9) fixe par rapport à celui-ci, **en ce que** le deuxième axe excentrique (9) est axialement parallèle au premier axe excentrique (8) mais espacé radialement par rapport à celui-ci, **en ce qu'**une rotation de l'arbre à excentrique (17) autour du premier axe excentrique (8) mène à une modification de la position du flasque de palier (4) par rapport au carter de transmission (21), et **en ce que** l'arbre à excentrique (17) est relié de manière solidaire en rotation à un élément de fixation (18), **en ce que** l'élément de fixation (18) comprend une région de fixation (13), et **en ce que** l'élément de fixation (18) est assujetti par rapport au carter de transmission (21) à l'aide d'un moyen d'assujettissement (11) de sorte qu'un mouvement de rotation de l'arbre à excentrique (17) autour du premier axe excentrique (8) soit empêché.

3. Dispositif d'entraînement de motocyclette selon la revendication 2, **caractérisé en ce que**
l'élément de fixation (18) comprend une région de blocage (14),
**en ce que** la région de blocage (14) comprend au moins deux évidements pour le blocage de l'élément de fixation (18) par rapport au carter de transmission (21) dans des positions distinctes.

4. Dispositif d'entraînement de motocyclette selon l'une des revendications précédentes, **caractérisé en ce que**
celui-ci comprend un autre flasque de palier doté d'un autre mécanisme de réglage pour la modification de la position de l'autre flasque de palier par rapport au carter de transmission (21), et **en ce que** l'arbre d'entrée de transmission (23) est monté rotatif dans un autre palier d'arbre d'entrée de transmission dans l'autre flasque de palier.

5. Procédé permettant d'ajuster un jeu d'engrènement d'un dispositif d'entraînement de motocyclette selon l'une des revendications précédentes,
comportant les étapes de
détection d'un jeu d'engrènement initial entre le pignon primaire (5) et la roue dentée primaire (6), comparaison du jeu d'engrènement initial avec un jeu d'engrènement de consigne,
ajustement d'une position de consigne du flasque de palier (4) par rapport au carter de transmission (21) au moyen du mécanisme de réglage (20), dans lequel, dans cette position de consigne, un jeu d'engrènement réel entre le pignon primaire (5) et la roue dentée primaire (21) correspond au moins sensiblement au jeu d'engrènement de consigne.

6. Procédé permettant d'ajuster le jeu d'engrènement selon la revendication 5,
**caractérisé en ce**
**qu'**après que le flasque de palier (4) a été amené à la position de consigne à l'aide du mécanisme de réglage (20), l'élément de fixation (18) est relié au carter de transmission (21) au moyen de sa région de blocage (14) à l'aide d'un élément de blocage et le flasque de palier (4) est ainsi retenu dans la position de consigne.

7. Procédé selon l'une des revendications 5 ou 6, **caractérisé en ce que**
le flasque de palier (4) est, après que celui-ci a été retenu dans la position de consigne au moyen de l'élément de blocage, relié au carter de transmission (10) à l'aide d'autres moyens d'assujettissement (21).

8. Procédé selon l'une des revendications 5 à 7, **caractérisé en ce que** l'élément de fixation (18) est relié au carter de transmission (21) dans la région de fixation (13), et **en ce que** l'élément de blocage est retiré après que l'élément de fixation (18) a été relié au carter de transmission (21) à l'aide du moyen d'assujettissement (11).
